# EUROPÄISCHE PATENTSCHRIFT

(11) **EP 2 511 615 B1**
(45) Veröffentlichungstag und Bekanntmachung des Hinweises auf die Patenterteilung: **12.08.2015**
(21) Anmeldenummer: 12162869.7
(22) Anmeldetag: 02.04.2012
(51) Int. Cl.: F24C 15/20

(54) **Filtereinheit für eine Dunstabzugshaube**
Filter unit for an extractor hood
Unité de filtre pour une hotte aspirante

(30) Priorität: 11.04.2011 DE 102011007165
(43) Veröffentlichungstag der Anmeldung: 17.10.2012
(73) Patentinhaber: BSH Hausgeräte GmbH, 81739 München (DE)
(72) Erfinder: Ehrensberger, Julia, 81541 München (DE); Grobleben, Ralf, 75015 Bretten (DE); Klunker, Sándor, 81927 München (DE); Kotlinski, Thomas, 80337 München (DE); Kraemer, Oliver, 80469 München (DE); Metz, Daniel, 76689 Karlsdorf-Neuthard (DE); Ortmann, Christoph, 81371 München (DE); Reiff, Udo, 75438 Knittlingen (DE); Uebele, Volkmar, 61231 Bad Nauheim (DE)

(56) Entgegenhaltungen:
- EP-A1- 1 231 436
- EP-A1- 2 172 711
- EP-A1- 2 469 187
- EP-A2- 1 855 059
- DE-A1-102008 020 149
- DE-U- 1 932 824
- US-A- 4 610 705

## Beschreibung

Die Erfindung betrifft eine Filtereinheit für eine Dunstabzugshaube.

Es sind Dunstabzugshauben bekannt, bei denen vor dem eigentlichen Fettfilter, der beispielsweise ein Streckmetallfilter sein kann, eine sogenannte Prallplatte angeordnet ist. Die Prallplatte wird in einem definierten, ausreichend großen Abstand von dem Fettfilter unmittelbar an der Sichthaube der Dunstabzugshaube befestigt.

Durch diese Art der Befestigung kann der Wrasen am Rand der Prallplatte entlang strömen und zu dem Fettfilter gelangen. Hierdurch wird die zur Reinigung des Wrasens geforderte Umlenkung beziehungsweise die geforderte Verwirbelung des Wrasens erzielt. Filtereinheiten, bei denen die Reinigung des Wrasen auf diese Weise erfolgt, werden auch als Randabsaugfilter bezeichnet.

In der DE 1 932 824 U ist eine Absaughaube beschrieben, bei der die Absaughaubenöffnung von einer Schutzplatte abgedeckt ist, deren Kanten mit den Absaughaubenaußenwänden einen rundum offenen Ansaugspalt bilden. Die Schutzplatte ist durch ein Scharnier und einen Schnapper aufklappbar und herausnehmbar.

Aus DE 10 2008 020 149 A1 ist eine Filtereinheit für eine Dunstabzugsvorrichtung mit Randabsaugung bekannt, die das Filterelement zumindest teilweise hält und ein Wrasenleitblech mit einen Prallbereich aufweist.

In US 4610705 A wird eine Filtereinheit für eine Dunstabzugshaube beschrieben, die aus mehreren unterschiedlichen Schichten besteht.

EP 1 855 059 A2 offenbart einen Tischlüfter, der eine Filtereinheit und eine daran beweglich angeordnete Glasplatte aufweist.

In EP 2 172 711 A1 wird eine Dunstabzugsvorrichtung mit einem plattenförmigen Wrasenschirm beschrieben, der mit einer kratzfesten Hartschicht beschichtet ist. Weiterhin ist in einer früheren Anmeldung eine Filtereinheit für eine Dunstabzugshaube vorgeschlagen worden, die wenigstens ein Filterelement aufweist, das wiederum wenigstens einen Filter und wenigstens eine Filterhalterung aufweist. An dem Filterelement ist zumindest eine Schutzplatte lösbar befestigt. Die Schutzplatte besteht hierbei aus Glas oder Metall.

Obwohl durch diese Schutzplatte eine Prallplatte des Filterelementes vor mechanischer und thermischer Beschädigung sowie gegen Verunreinigungen geschützt werden kann, weist diese Filtereinheit eine Reihe von Nachteilen auf. Zum einen ist das Gewicht der Schutzplatte bei diesen Materialien hoch. Zum anderen sind die Schutzplatten aus diesen Materialien in der Regel nicht elastisch verformbar.

Aufgabe der vorliegenden Erfindung ist es daher, eine Filtereinheit, insbesondere einen Randabsaugfilter, zu schaffen, die diese Nachteile des Standes der Technik nicht aufweist aber dennoch auf einfache Weise einen zuverlässigen Schutz für eine Prallplatte des Filterelementes bietet.

Der Erfindung liegt die Erkenntnis zugrunde, dass diese Aufgabe gelöst werden kann, indem eine Schutzplatte, die aus mindestens zwei Schichten besteht, verwendet wird.

Die Aufgabe wird daher durch die Merkmale des Anspruchs 1 gelöst.

Als Filterelement wird im Sinne der vorliegenden Erfindung vorzugsweise ein Randabsaugfilterelement mit einer Prallplatte verstanden, wobei die Prallplatte Teil des Filterelementes ist. Das Filterelement weist vorzugsweise einen Filter und eine Filterhalterung auf. Die Prallplatte stellt hierbei einen Teil der Filterhalterung dar. Von der vorliegenden Erfindung sind aber auch Filterelemente abgedeckt, bei denen beispielsweise eine Prallplatte als separates Bauteil zu dem Filterelement vorliegt. Als Prallplatte des Filterelementes wird im Folgenden daher sowohl eine Prallplatte verstanden, die einen Teil des Filterelementes darstellt als auch eine separate Prallplatte, die dem Filterelement in Strömungsrichtung vorgelagert ist. Vorzugsweise ist die Schutzplatte an der Prallplatte des Filterelementes befestigt.

Als in Strömungsrichtung vor dem Filterelement angeordnet wird eine Schutzplatte im Sinne der vorliegenden Erfindung verstanden, die von Wrasen und Dünsten, die die Dunstabzugshaube anströmen erreicht wird, bevor andere Teile des Filterelementes erreicht werden. Für diese Anordnung kann die Schutzplatte beispielsweise an einer Prallplatte des Filterelementes befestigt sein.

Als Schutzplatte wird im Sinne der vorliegenden Erfindung ein flächiges Bauteil verstanden, das eine Schutzeinrichtung für das Filterelement, insbesondere für die Prallplatte des Filterelementes, oder für eine in Strömungsrichtung vor dem Filterelement angeordnete, separate Prallplatte, darstellt. Die Schutzplatte ist so an dem Filterelement angeordnet, dass diese im montierten Zustand der Dunstabzugshaube zwischen dem Filterelement und einer unterhalb der Dunstabzugshaube befindlichen Kochstelle an dem Filterelement positioniert ist. Bei einer solchen Positionierung kann das Filterelement durch die Schutzplatte vor beispielweise Verunreinigungen oder dergleichen, die durch das Anströmen des Wrasens an dessen Unterseite abgeschieden werden könnten, geschützt werden. Zudem werden das Filterelement und insbesondere die Prallplatte durch die Schutzplatte auch vor chemischen und mechanischen Beschädigungen geschützt. Solche chemischen und mechanischen Beschädigungen können beispielsweise bei der Reinigung des Filterelementes, beispielsweise in einer Spülmaschine auftreten.

Die Schutzplatte weist vorzugsweise eine Größe auf, die der Größe der Prallplatte des Filterelementes entspricht. Die Größe der Schutzplatte ist hierbei besonders bevorzugt geringfügig größer als die Größe der Prallplatte. Indem die Größe der Schutzplatte zumindest der Größe der Prallplatte entspricht, ist zum einen die gesamte Fläche der Prallplatte von der Schutzplatte abgedeckt und kann somit geschützt werden. Zum anderen kann durch diese große Abmessung der Schutzplatte auch eine zuverlässige Befestigung der Schutzplatte an dem Filterelement und insbesondere an der Prallplatte des Filterelementes gewährleistet werden.

Eine Schutzplatte ist vorzugsweise ein ebenes, flächiges Bauteil. Flächig wird dabei so verstanden, dass zwei Flächenabmessungen der Schutzplatte deutlich größer sind, als die dritte Flächenabmessung. So sind insbesondere die Breite und die Länge der Schutzplatte deutlich größer, als die Dicke oder die Höhe der Schutzplatte. Die Schutzplatte kann aber abweichend von der ebenen Form auch eine dreidimensionale Kontur, beispielsweise eine gewölbte Form, aufweisen. Die Form der Schutzplatte ist vorzugsweise der Form der Unterseite des Filterelementes, insbesondere der Prallplatte angepasst.

Indem die Schutzplatte aus mindestens zwei Schichten besteht, können die erforderlichen Eigenschaften der Schutzplatte zuverlässig eingestellt werden. Somit ist es beispielsweise möglich durch eine der mindestens zwei Schichten eine erforderliche Steifigkeit der Schutzplatte zu schaffen. Durch eine weitere der Schichten kann beispielsweise die Oberflächenbeschaffenheit der Schutzplatte eingestellt werden. Insbesondere kann die mindestens eine weitere Schicht gegen Diffusion von Verunreinigungen, wie Fetten in die andere(n) Schichten schützen. Indem die Schutzplatte aus mehreren Schichten besteht, können zudem Eigenschaften der Schutzplatte, wie Gewicht und elastische Verformbarkeit durch Wahl geeigneter Materialien und Wahl geeigneter Schichtdicken der einzelnen Schichten gezielt eingestellt werden.

Gemäß einer Ausführungsform stellt mindestens eine der Schichten eine Beschichtung einer der mindestens einen weiteren Schicht dar. Bei dieser Ausführungsform umfasst die Schutzplatte eine Trägerschicht, die auf mindestens einer Seite mit einem Beschichtungsmaterial beschichtet ist. Die Trägerschicht wird auch als Grundschicht bezeichnet. Die Beschichtungsschicht, die auch als Beschichtung bezeichnet wird, deckt vorzugsweise die gesamte Fläche der Trägerschicht zumindest auf einer Seite der Trägerschicht ab. Es ist auch möglich, dass die Schutzplatte aus einer Trägerschicht und zwei Beschichtungsschichten besteht. In diesem Fall sind die Oberseite und Unterseite der Trägerschicht jeweils mit einer Beschichtung versehen. Die Beschichtung kann die Trägerschicht auch vollständig umgeben, das heißt auch die Kanten beziehungsweise Ränder bedecken.

Der Vorteil der Verwendung einer Beschichtung besteht insbesondere in der einfacheren Herstellung der Schutzplatte. Die Beschichtung kann beispielsweise durch Tauchbeschichtung erfolgen. Es sind aber auch andere Beschichtungsverfahren, wie Sprühbeschichten, möglich. Zudem ist die Schichtdicke der Beschichtungsschicht gering, insbesondere geringer als die Schichtdicke der Trägerschicht. Somit kann bei einer vorgegebenen Dicke der Schutzplatte der größte Teil der Dicke durch die Trägerschicht gebildet werden. Diese kann beispielsweise aus einem harten, formstabilen Material bestehen. Die Beschichtung kann in diesem Fall dazu dienen die Kraftzfestigkeit der Schutzplatte zu gewährleisten oder chemische Reaktionen des Materials der Trägerschicht zu verhindern. Auch kann durch die Beschichtung beispielsweise die thermische Beständigkeit der Schutzplatte erhöht werden. Vorzugsweise wird die Trägerschicht einseitig beschichtet. Die Beschichtung wird hierbei auf der Unterseite der Trägerschicht aufgebracht. Somit liegt die Beschichtung an der Anströmseite der Schutzplatte vor. Der Beschichtungsvorgang kann einerseits die Oberfläche der Trägerschicht gegen eindiffundierende Fette versiegeln und andererseits gegen mechanische Beschädigungen schützen.

Es hat sich gezeigt, dass die Schichtdicke der Beschichtungsschicht gering sein kann und dennoch die gewünschten Eigenschaften an der Schutzplatte eingestellt werden können. Vorzugsweise liegt die Schichtdicke der Beschichtungsschicht im Bereich von 2 bis 20µm, besonders bevorzugt vorzugsweise im Bereich von 4 bis 10µm. Durch diese geringe Schichtdicke der Beschichtungsschicht können zum einen der Materialbedarf und damit die Kosten gering gehalten werden. Zum anderen ist eine solche geringe Schichtdicke insbesondere auch bei einer vollständigen Beschichtung einer Trägerschicht von Vorteil. Bei dieser vollständigen Beschichtung sind außer der Ober- und Unterseite der Träger- oder Grundschicht auch die Ränder der Träger- oder Grundschicht mit der Beschichtung versehen. Dadurch beeinflusst die Schichtdicke der Beschichtungsschicht die Breite oder Tiefe der Schutzplatte. Insbesondere bei Geräten, bei denen Ultraschallfunktionen in der Dunstabzugshaube genutzt werden, ist aber die Abmessung des Spaltes, über den die Randabsaugung erfolgt, von großer Bedeutung. Ragt die Schutzplatte über die Ränder der Prallplatte des Filterelementes hinaus, so ragt sie in den Spalt, der für die Randabsaugung zur Verfügung steht, hinein. Je geringer daher die Vergrößerung der Breite und Tiefe durch die Beschichtungsschicht ist, desto weniger wird die Spaltbreite verringert und die Ultraschallfunktionen können optimal genutzt werden.

Gemäß einer bevorzugten Ausführungsform besteht eine der Schichten der Schutzplatte aus einem Polycarbonat. Die Schicht, die aus diesem Kunststoff besteht, ist vorzugsweise die Trägerschicht, die mit einer Beschichtung versehen werden kann. Polycarbonat hat sich als geeignetes Material erwiesen, da dieses zum einen kostengünstig ist und eine hohe Festigkeit und Steifigkeit aufweist. Somit kann auch bei relativ geringer Schichtdicke der Trägerschicht eine großflächige Schutzplatte hergestellt werden. Das Gewicht der Schutzplatte ist hierbei im Vergleich zu einer Glas oder Metallplatte gering. Weiterhin weist Polycarbonat den Vorteil auf, dass dieses eingefärbt werden kann. Insbesondere bei Dunstabzugshauben, bei denen die Filterelemente schräg angebracht sind, so genannte Kopffrei- oder Schrägessen, ist die Prallplatte des Filterelementes in der Regel für den Benutzer der Dunstabzugshaube sichtbar. Somit ist auch eine an dem Filterelement befestigte Schutzplatte sichtbar. Durch Einfärben der Trägerschicht kann somit der optische Eindruck der Dunstabzugshaube verändert werden, insbesondere können Designaspekte berücksichtigt werden. Zudem stellt Polycarbonat ein transparentes Material dar, so dass der Blick auf die Metalloberfläche der Prallplatte auch nach Anbringung der Schutzplatte gewährleistet werden kann.

Bevorzugt umfasst die Schutzplatte eine Polysiloxanschicht, die auch als Silikonhardcoating bezeichnet wird. Diese Schicht stellt vorzugsweise eine Beschichtungsschicht dar, die auf einer Trägerschicht aufgebracht wird. Besonders bevorzugt ist die Trägerschicht in diesem Fall eine Polycarbonatschicht. Obwohl Polycarbonat die oben erwähnten Vorteile aufweist, besitzt dieses Material auch Nachteile beim Einsatz als Schutzplatte an einem Filterelement. Zum einen ist Polycarbonat kratzempfindlich und neigt zu Spannungsrissbildung. Zudem können Verunreinigungen, wie Fette in das Polycarbonat eindiffundieren. Schließlich ist Polycarbonat entflammbar. Diese Nachteile können durch die Verwendung einer Silikonhardcoatingschicht behoben oder zumindest verringert werden. Die Verringerung der Entflammbarkeit der Schutzplatte und das Verhindern des Eindringens von Verunreinigungen sind insbesondere bei dem Einsatzort der Schutzplatte gemäß der Erfindung von besonderer Bedeutung. Die Filtereinheit ist in der Dunstabzugshaube oberhalb der Kochstelle vorgesehen. Hier trifft der Wrasen, der von Gargefäßen aus aufsteigt, auf. Zudem wird die Schutzplatte an diesem Einbauort auch hohen Temperaturen und beispielsweise beim Flambieren von Speisen auch unmittelbar Flammen ausgesetzt. Zudem ist die Oberflächenspannung bei einem Silikonhardcoating niedrig und diese Beschichtung zeichnet sich zudem durch eine niedrige Polarität aus.

Erfindungsgemäß ist es möglich als eine der Schichten eine Folie zu verwenden. Die Folie kann eine Beschichtungsschicht darstellen. Gemäß einer Ausführungsform der Erfindung stellt die Folie aber eine Trägerschicht dar, die auf zumindest einer Seite mit einer Beschichtung versehen wird. Bei dieser Ausgestaltung sind zum einen der Materialaufwand und damit auch die mit der Herstellung verbundenen Kosten minimiert. Zudem weist bei dieser Ausführungsform die Schutzplatte ein minimales Gewicht auf. Aufgrund des geringen Gewichts aber auch aufgrund einer gewissen Flexibilität, die sich aufgrund der geringen Dicke einer Folie ergibt, können bei dieser Ausführungsform der Schutzplatte gewisse Vorteile erzielt werden. Beispielsweise kann die Schutzplatte durch einfache Fixiermittel, wie Klebstreifen an dem Filterelement befestigt werden.

Die Dicke der Schutzplatte kann je nach Anforderungen gewählt werden. Die Schutzplatte kann beispielsweise eine Dicke im Bereich von 0,5mm bis 10mm aufweisen. Wird eine Folie als Trägerschicht verwendet, kann die Dicke der Schutzplatte insgesamt im Bereich von 0,5mm bis 1mm liegen. Wird hingegen eine dickere Trägerschicht in Form einer Platte oder Scheibe verwendet, so kann die Dicke im Bereich von 3 bis 6mm liegen.

Die Schutzplatte, die auch als Blende bezeichnet werden kann, wird schwimmend an dem Filterelement gelagert, so dass keine mechanischen Spannungen auf den Werkstoff, insbesondere den Werkstoff der Trägerschicht und/oder der Beschichtung, einwirken können und daher keine Spannungsrisse zu erwarten sind.

Die Schutzplatte kann lösbar an dem Filterelement befestigt sein. Als lösbare Verbindung vor vorzugsweise eine Rast-, Schieb- oder Steckverbindung verwendet.

Als Befestigungstechnik kann insbesondere bei einer Schutzplatte, die eine Plattenware darstellt, beispielsweise das Einschieben über das Filterelement an der Prallplatte mit seitlich an der Platte ausgeformten U-Profilen verwendet werden. Durch diese Arten der Anbringung wird eine schwimmende Befestigung der Schutzplatte gewährleistet, wodurch auch unterschiedlichen Ausdehnungskoeffizienten der Materialien der Schutzplatte und der Prallplatte Rechnung getragen werden kann.

Eine Schutzplatte kann über eine Klebverbindung mit der Prallplatte des Filterelementes verbunden werden. Eine solche Art der Befestigung ist aufgrund des erfindungsgemäßen Aufbaus der Schutzplatte und der dadurch einstellbaren Eigenschaften der Schutzplatte, wie beispielsweise einem geringen Gewicht, möglich. Die Klebverbindung kann beispielsweise durch Verwendung einer doppelseitigen Klebstofffolie, die auf eine Seite der Schutzplatte aufgebracht wird, hergestellt werden. Die Klebstofffolie kann hierbei Klebstreifen darstellen, die nur einen Teil der Fläche der Schutzplatte abdecken. Es ist allerdings auch möglich die vollständige Fläche der Schutzplatte auf einer Seite mit einer Klebstofffolie zu versehen. Alternativ zu der Verwendung einer Klebstofffolie kann Klebstoff auch unmittelbar auf die Schutzplatte aufgebracht werden. Wird eine Klebstofffolie, auch in Form von Klebstreifen oder Klebbändern verwendet, so sind diese vorzugsweise an den Rändern mit Silikonkleber abgedichtet. Zusätzlich oder alternativ kann an dem Rand der Prallplatte des Filterelementes ein Silikonkleber zwischen die Prallplatte und die Schutzplatte gebracht werden, um so den gesamten Zwischenraum zwischen den beiden Platten abzudichten. Ein Vorteil dieser Abdichtung besteht darin, dass die Klebverbindung zwischen den beiden Platten nicht durch eindringende Feuchtigkeit gelöst wird. Somit kann die Filtereinheit, bei der die Schutzplatte über eine Klebverbindung befestigt ist beispielsweise in einer Spülmaschine gereinigt werden. Zusätzlich zu der Klebeverbindung können an der Schutzplatte Positionierelemente vorgesehen sein, mittels derer die relative Ausrichtung der Schutzplatte zu der Prallplatte gewährleistet werden kann.

Gemäß einer Ausführungsform ist die Schutzplatte über eine Rastverbindung an der Prallplatte des Filterelementes befestigt. Diese Verbindungsart weist den Vorteil auf, dass die Verbindung zwischen der Schutzplatte und dem Filterelement, insbesondere der Prallplatte, bei Bedarf, beispielsweise zu Reinigungszwecken oder zum Ersetzen einer Schutzplatte gelöst werden kann. Die zur Herstellung der Rastverbindung erforderlichen Rastelemente, insbesondere Rastnasen oder Rasthaken, können an dem Filterelement angebracht sein. Erfindungsgemäß ist aber an einer Seite der Schutzplatte mindestens ein Rastelement ausgebildet oder aufgeklebt. Diese Anordnung der Rastelemente weist den Vorteil auf, dass diese für den Benutzer der Dunstabzugshaube nicht sichtbar sind. Die Rastelemente sind vorzugsweise auf der Seite der Schutzplatte vorgesehen, die im montierten Zustand dem Filterelement und damit der Prallplatte zugewandt ist. Die Rastelemente können mit der Schutzplatte einteilig ausgestaltet sein. Alternativ können die Rastelemente aber auch an der Schutzplatte angeklebt sein.

Die Rastelemente sind an der Schutzplatte im Bereich des Randes der Schutzplatte auf der Oberseite der Schutzplatte vorgesehen. Die Größe der Schutzplatte entspricht der Größe der Prallplatte des Filterelementes und ist vorzugsweise geringfügig größer als die Prallplatte. Dadurch können die im Randbereich angeordneten Rastelemente in dem Überstand der Schutzplatte über die Prallplatte liegen und somit die Prallplatte umgreifen. Da zwischen der Prallplatte und dem eigentlichen Filter des Filterelementes ein Teil der Filterhalterung vorgesehen ist, in dem in der Regel Schlitze oder andere Öffnungen vorgesehen sind, die eine Randabsaugung mit dem Filterelement ermöglichen, können die Rastelemente vorzugsweise in diese Schlitze oder Öffnungen eingreifen. Das Einbringen zusätzlicher Öffnungen an dem Filterelement ist daher nicht erforderlich.

Die Erfindung wird im Folgenden erneut unter Bezugnahme auf die beiliegenden Zeichnungen erläutert. Hierbei zeigen:
Figur 1: eine schematische, perspektivische einer Dunstabzugshaube mit zwei Filtereinheiten gemäß einer Ausführungsform der vorliegenden Erfindung;
Figur 2: eine schematische Ansicht des Randbereiches einer Ausführungsform eines Filterelementes der erfindungsgemäßen Filtereinheit;
Figur 3: eine schematische Ansicht einer Ausführungsform des erfindungsgemäßen Filterelementes;
Figur 4: eine schematische Ansicht einer weiteren Ausführungsform des erfindungsgemäßen Filterelementes;
Figur 5: eine schematische Ansicht einer weiteren Ausführungsform des erfindungsgemäßen Filterelementes;
Figur 6: eine schematische Darstellung des Aufbaus einer Ausführungsform einer Schutzplatte; und
Figur 7: eine schematische Darstellung der Befestigung einer Ausführungsform der Schutzplatte an der Prallplatte.

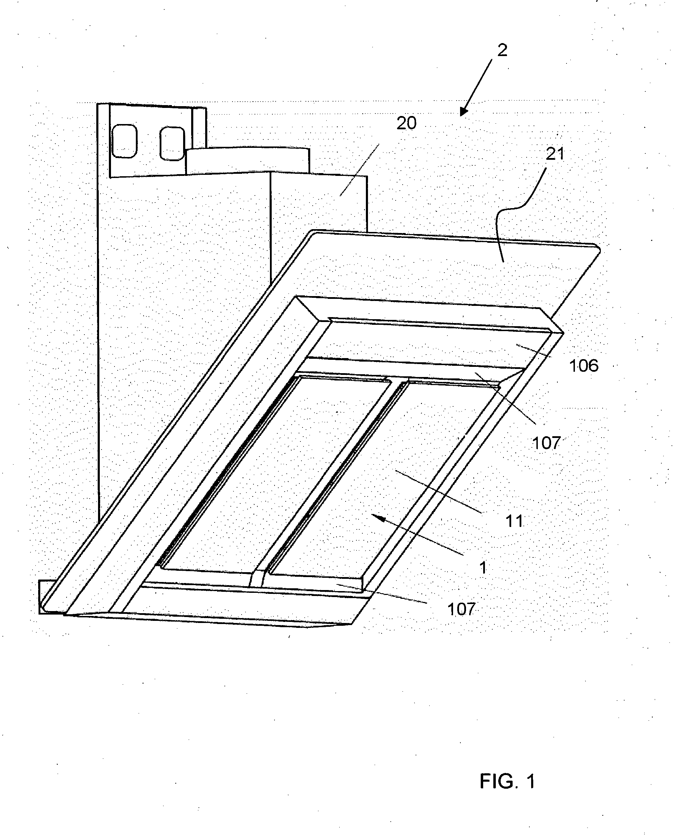

In Figur 1 ist eine Dunstabzugshaube 2 gezeigt, die eine Schrägesse darstellt. Die Dunstabzugshaube 2 besteht aus einem Kamin 20 und einer unterhalb des Kamins 20 schräg nach oben gerichteten Sichthaube 21. In der Sichthaube 21 sind in der Unterseite zwei Filtereinheiten 1 aufgenommen. In der Ansicht in Figur 1 sind von den Filtereinheiten 1 jeweils die Schutzplatte 11, der Rahmen 106 sowie die Randabsaugspalte 107 zu erkennen.

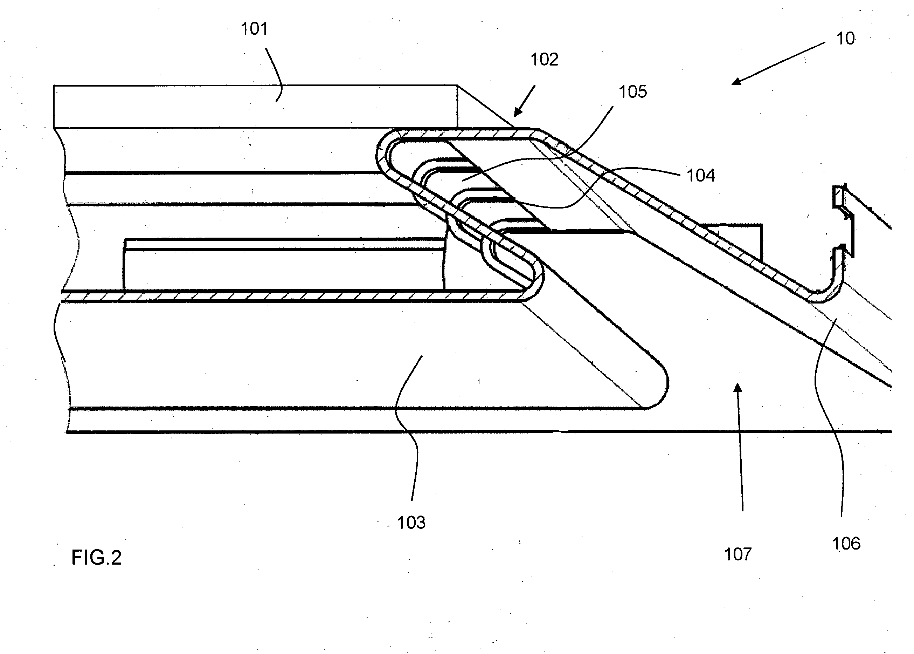

Figur 2 zeigt eine Ausführungsform eines Filterelementes 10, an dem eine Schutzplatte (nicht gezeigt) vorgesehen werden kann. Das Filterelement 10 besteht aus einem Filter 101, der auf einer Filterhalterung 102 gehalten ist. Die Filterhalterung 102 umfasst eine Prallplatte 103, die über geneigte, nach oben gerichtete Stege 104, zwischen denen Spalte beziehungsweise Öffnungen 105 bestehen, mit dem Bereich der Filterhalterung 102 verbunden ist, auf dem der Filter 101 gehalten ist. Von diesem Bereich aus verläuft ein Verbindungsbereich schräg nach unten und geht etwa auf der Höhe der Prallplatte 103 in einen Rahmen 106 über. Zwischen dem äußeren Rand der Prallplatte 103 und dem Rahmen 106 ist somit ein Randabsaugspalt 107 gebildet, über den Wrasen zu den Öffnungen 105 und durch diese zu dem Filter 101 gelangen kann.

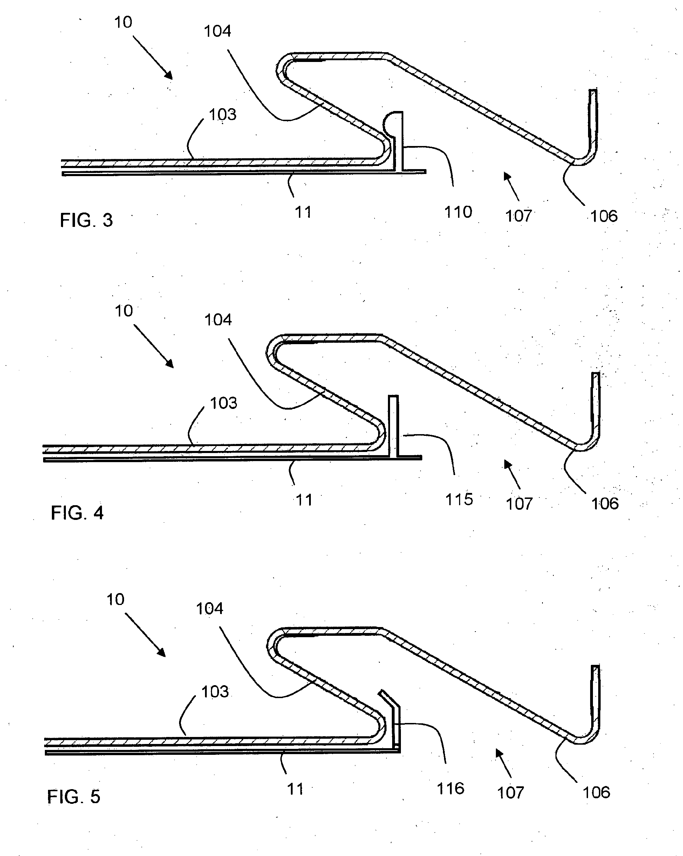

In den Figuren 3 bis 5 sind unterschiedliche Ausführungsformen der erfindungsgemäßen Filtereinheit 1 gezeigt, wobei der Filter 101 nicht dargestellt ist.

Das Filterelement 10 in den Figuren 3 bis 5 entspricht dem in Figur 2 gezeigten. An dem Filterelement 10 ist eine Schutzplatte 11 befestigt. Diese erstreckt sich parallel zu der Prallplatte 103 und liegt vorzugsweise an dieser an. In allen drei Ausführungsformen ist die Größe der Schutzplatte 11 größer als die Größe der Prallplatte 103. Die Schutzplatte 11 steht somit über den Rand der Prallplatte 103 über. An diesem Überstand sind an der Oberseite der Schutzplatte 11 Rastelemente 110, Positionierelemente 115 oder Führungselemente 116 angeordnet.

In Figur 3 umfasst das Rastelement 110 einen nach oben ragenden Rastarm, der an der Innenseite eine Rastnase aufweist. Als Innenseite des Rastarms wird hierbei die Seite bezeichnet, die der Prallplatte 103 zugewandt ist. Aufgrund der Neigung der Stege 104 des Filterelementes 10, die sich von der Prallplatte 103 aus nach oben erstrecken, kann das Rastelement 110 mit dem Steg 104 verrasten oder in eine zwischen den Stegen 104 gebildete Öffnung 105 eingreifen.

In Figur 4 stellt das Positionierelement 115 einen von der Schutzplatte 11 gerade nach oben gerichteten Arm dar. Bei dieser Ausführungsform wird die Schutzplatte 11 durch das Positionierelement 115 lediglich in horizontaler Richtung in Position gehalten. Bei dieser Ausführungsform wird vorzugsweise zusätzlich eine Klebverbindung zwischen der Oberseite der Schutzplatte 11 und der Unterseite der Prallplatte 103 hergestellt.

In Figur 5 stellt das Führungselement 116 einen von der Schutzplatte 11 gerade nach oben gerichteten Arm dar, der an dem oberen Ende nach innen abgewinkelt ist. Bei dieser Ausführungsform kann die Schutzplatte 11 beispielsweise von der Seite auf die Prallplatte 103 aufgeschoben werden. Auch bei dieser Ausführungsform, bei der der abgewinkelte Bereich des Führungselementes 116 nicht an dem Steg 104 anliegt oder in eine Öffnung 105 eingreift, kann zusätzlich eine Klebverbindung zwischen der Oberseite der Schutzplatte 11 und der Unterseite der Prallplatte 103 hergestellt werden.

Bei den gezeigten Ausführungsformen sind vorzugsweise über den Rand der Schutzplatte 11 verteilt mehrere der Elemente 110, 115, 116 vorgesehen. Die Elemente 110, 115, 116 können, wie in den Figuren 3 und 4 gezeigt einteilig mit der Schutzplatte 11 ausgestaltet sein. Es ist aber auch möglich, dass die Elemente 110, 115, 116, wie in Figur 5 gezeigt, auf die Oberseite der Schutzplatte 11 aufgeklebt sind.

Weiterhin kann die Position der Elemente 110, 115, 116, wie in den Figuren 3 und 4 gezeigt in der Fläche der Schutzplatte 11 liegen, das heißt zu dem Rand der Schutzplatte 11 beabstandet sein. Wie sich aus Figur 5 ergibt, ist es aber auch möglich die die Elemente 110, 115, 116 so anzuordnen, dass deren Außenseite mit dem Rand der Schutzplatte 11 bündig ist.

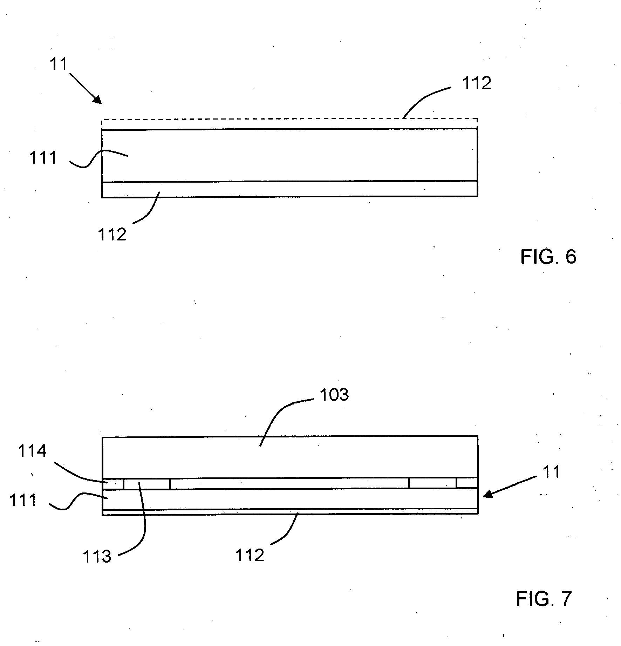

In Figur 6 ist der Aufbau einer Ausführungsform der Schutzplatte 11 schematisch gezeigt. Die Schutzplatte 11 besteht bei dieser Ausführungsform aus zwei Schichten 111, 112. Die Schicht 111 stellt eine Trägerschicht dar. An der Unterseite der Trägerschicht 111 ist eine weitere Schicht vorgesehen, die eine Beschichtungsschicht 112 darstellt. Die Dicke der Beschichtungsschicht 112 ist wesentlich geringer als die Dicke der Trägerschicht 111. Zusätzlich kann, wie durch die gestrichelte Linie in Figur 6 angedeutet auch an der Oberseite der Trägerschicht 111 eine weitere Beschichtungsschicht 112 vorgesehen sein.

In Figur 7 ist eine Ausführungsform der Schutzplatte 11 schematisch in dem an der Prallplatte 103 befestigten Zustand gezeigt. Die Schutzplatte 11 besteht auch bei dieser Ausführungsform aus zwei Schichten, nämlich einer Trägerschicht 111 und einer Beschichtungsschicht 112, die an der Unterseite der Trägerschicht 111 vorgesehen ist beziehungsweise auf die Unterseite der Trägerschicht 111 aufgebracht ist.

Auf der Oberseite der Trägerschicht 111, die gleichzeitig die Oberseite der Schutzplatte 11 darstellt, sind im Bereich des Randes der Schutzplatte 11 Klebstreifen 113 aufgebracht. Nach außen sind die Klebstreifen 113 zum Rand der Schutzplatte 11 hin durch Dichtstreifen 114 abgedichtet. Über die Klebstreifen 113 ist die Schutzplatte 11 mit der Unterseite der Prallplatte 103 verbunden und durch die Dichtstreifen 114 wird der Zwischenraum zwischen der Schutzplatte 11 und der Prallplatte 114 am Rand abgedichtet.

Die Figuren sind nicht maßstabsgetreu. Die Erfindung ist nicht auf die gezeigten Ausführungsformen beschränkt. Beispielsweise kann auch ein Filterelement verwendet werden, bei dem eine separate Prallplatte dem Filterelement zugeordnet ist.

Die Erfindung weist eine Reihe von Vorteilen auf. Insbesondere ist die Blende transparent. Die Blende kann farblich ausgestaltet sein, indem beispielsweise der Werkstoff eingefärbt wird. Weiterhin erfüllt der Werkstoff die Brennbarkeitsanforderungen und erlaubt somit den Einsatz an der Unterseite einer Dunstabzugshaube. Der Werkstoff weist eine gewisse Stabilität auf, die gegebenenfalls durch die Silikonhardcoatings noch verstärkt wird. Wegen der Silikonhardcoatingbeschichtung ist die Blende zudem Spannungsrissunempfindlich. Weiterhin ist der Werkstoff auch fettunempfindlich, da die Blende beispielsweise durch Tauchbeschichtung beschichtet wurde. Aufgrund der geringen Oberflächenpolarität ist die Blende zudem reinigungsfreundlich. Schließlich sind bei dem Werkstoff die Designmöglichkeiten und Bearbeitungsmöglichkeiten wesentlich flexibler als bei anderen Werkstoffen, wie beispielsweise Glas.

### Bezugszeichenliste

- 1: Filtereinheit

- 10: Filterelement
- 101: Filter
- 102: Filterhalterung
- 103: Prallplatte
- 104: Stege
- 105: Öffnungen
- 106: Rahmen
- 107: Randabsaugspalt

- 11: Schutzplatte
- 110: Rastelement
- 111: Trägerschicht
- 112: Beschichtungsschicht
- 113: Klebstreifen
- 114: Dichtstreifen
- 115: Positionierelement
- 116: Führungselement

- 2: Dunstabzugshaube
- 20: Kamin
- 21: Sichthaube

## Patentansprüche

1. Filtereinheit für eine Dunstabzugshaube (2), die wenigstens ein Filterelement (10), eine Prallplatte (103) und wenigstens eine in Strömungsrichtung vor dem Filterelement (10) angeordnete Schutzplatte (11) aufweist, wobei die Prallplatte (103) Teil des Filterelementes (10) darstellt oder ein separates Bauteil ist, und wobei die Schutzplatte (11):
- sich parallel zu der Prallplatte (103) erstreckt und vorzugsweise an dieser anliegt und
- größer als die Prallplatte (103) ist und somit über den Rand der Prallplatte (103) übersteht
**dadurch gekennzeichnet, dass**
an diesem Überstand an der Oberseite der Schutzplatte (11) Rastelemente (110), Positionierelemente (115) oder Führungselemente (116) angeordnet sind und die Schutzplatte (11) aus mindestens zwei Schichten (111, 112) besteht.

2. Filtereinheit nach Anspruch 1, **dadurch gekennzeichnet, dass** mindestens eine der Schichten (111, 112) eine Beschichtung (112) einer der mindestens einen weiteren Schicht (111) darstellt.

3. Filtereinheit nach Anspruch 2, **dadurch gekennzeichnet, dass** die Schichtdicke der Beschichtungsschicht (112) im Bereich von 2 bis 20µm, vorzugsweise im Bereich von 4 bis 10µm liegt.

4. Filtereinheit nach einem der Ansprüche 1 bis 3, **dadurch gekennzeichnet, dass** eine der Schichten (111, 112) aus Polycarbonat besteht.

5. Filtereinheit nach einem der Ansprüche 1 bis 4, **dadurch gekennzeichnet, dass** mindestens eine der Schichten (111, 112) eine Polysiloxanschicht darstellt.

6. Filtereinheit nach einem der Ansprüche 1 bis 5, **dadurch gekennzeichnet, dass** eine der Schichten (111, 112) eine Folie darstellt.

7. Filtereinheit nach einem der Ansprüche 1 bis 6, **dadurch gekennzeichnet, dass** die Schutzplatte (11) eine Dicke im Bereich von 0,5mm bis 10mm, vorzugsweise im Bereich von 0,5mm bis 1 mm oder im Bereich von 3 bis 6mm aufweist.

8. Filtereinheit nach einem der Ansprüche 1 bis 7, **dadurch gekennzeichnet, dass** die Schutzplatte (11) über eine Klebverbindung mit der, Prallplatte (103) des Filter-elementes (10) verbunden ist.

9. Filtereinheit nach einem der Ansprüche 1 bis 8, **dadurch gekennzeichnet, dass** die Schutzplatte (11) über eine Rastverbindung an der, Prallplatte (103) des Filter-elementes (10) befestigt ist.

10. Filtereinheit nach einem der Ansprüche 1 bis 9, **dadurch gekennzeichnet, dass** an einer Seite der Schutzplatte (11) mindestens ein Rastelement (110) ausgebildet oder aufgeklebt ist.

## Claims

1. Filter unit for an extractor hood (2) which has at least one filter element (10), a baffle plate (103) and at least one protection plate (11) arranged in the flow direction upstream of the filter element (10), wherein the baffle plate (103) is part of the filter element (10) or is a separate element, and wherein the protection plate (11):
- extends parallel to the baffle plate (103) and preferably bears against the latter and
- is greater than the baffle plate (103) and accordingly overhangs the edge of the baffle plate (103)
**characterised in that**
snap-fit elements (110), positioning elements (115) or guide elements (116) are arranged on said overhang on the top side of the protection plate (11) and the protection plate (11) consists of at least two layers (111, 112).

2. Filter unit according to claim 1, **characterised in that** at least one of the layers (111, 112) constitutes a coating (112) of one of the at least one further layer (111).

3. Filter unit according to claim 2, **characterised in that** the thickness of the coating layer (112) lies in the range of 2 to 20µm, preferably in the range of 4 to 10µm.

4. Filter unit according to one of claims 1 to 3, **characterised in that** one of the layers (111, 112) consists of polycarbonate.

5. Filter unit according to one of claims 1 to 4, **characterised in that** at least one of the layers (111, 112) is a polysiloxane layer.

6. Filter unit according to one of claims 1 to 5, **characterised in that** one of the layers (111, 112) is a film.

7. Filter unit according to one of claims 1 to 6, **characterised in that** the protection plate (11) has a thickness in the range of 0.5mm to 10mm, preferably in the range of 0.5mm to 1mm or in the range of 3 to 6mm.

8. Filter unit according to one of claims 1 to 7, **characterised in that** the protection plate (11) is joined to the baffle plate (103) of the filter element (10) by means of an adhesive bond.

9. Filter unit according to one of claims 1 to 8, **characterised in that** the protection plate (11) is fixed to the baffle plate (103) of the filter element (10) by means of a snap-fit connection.

10. Filter unit according to one of claims 1 to 9, **characterised in that** at least one snap-fit element (110) is embodied or glued in place on one side of the protection plate (11).

## Revendications

1. Unité de filtrage pour une hotte aspirante (2), qui présente au moins un élément filtrant (10), une plaque déflectrice (103) et au moins une plaque protectrice (11) disposée en amont de l'élément filtrant (10) dans le sens d'écoulement, la plaque déflectrice (103) représentant une partie de l'élément filtrant (10) ou étant un composant séparé, et la plaque protectrice (11) :
- s'étendant parallèlement à la plaque déflectrice (103) et étant de préférence adjacente à celle-ci et
- étant plus grande que la plaque déflectrice (103) et étant ainsi en saillie au-delà du bord de la plaque déflectrice (103)
**caractérisée en ce que**
sur ce dépassement sur le côté supérieur de la plaque protectrice (11) sont disposés des éléments d'encliquetage (110), des éléments de positionnement (115) ou des éléments de guidage (116) et **en ce que** la plaque protectrice (11) est constituée d'au moins deux couches (111, 112).

2. Unité de filtrage selon la revendication 1, **caractérisée en ce qu'**au moins une des couches (111, 112) représente un revêtement (112) de l'une de l'au moins une autre couche (111).

3. Unité de filtrage selon la revendication 2, **caractérisée en ce que** l'épaisseur de couche de la couche de revêtement (112) est située dans la plage de 2 à 20 µm, de préférence dans la plage de 4 à 10 µm.

4. Unité de filtrage selon l'une quelconque des revendications 1 à 3, **caractérisée en ce que** l'une des couches (111, 112) est constituée de polycarbonate.

5. Unité de filtrage selon l'une quelconque des revendications 1 à 4, **caractérisée en ce qu'**au moins une des couches (111, 112) représente une couche de polysiloxane.

6. Unité de filtrage selon l'une quelconque des revendications 1 à 5, **caractérisée en ce que** l'une des couches (111, 112) représente une feuille.

7. Unité de filtrage selon l'une quelconque des revendications 1 à 6, **caractérisée en ce que** la plaque protectrice (11) présente une épaisseur située dans la plage de 0,5 mm à 10 mm, de préférence dans la plage de 0,5 mm à 1 mm ou dans la plage de 3 à 6 mm.

8. Unité de filtrage selon l'une quelconque des revendications 1 à 7, **caractérisée en ce que** la plaque protectrice (11) est reliée à la plaque déflectrice (103) de l'élément filtrant (10) par l'intermédiaire d'une liaison adhésive.

9. Unité de filtrage selon l'une quelconque des revendications 1 à 8, **caractérisée en ce que** la plaque protectrice (11) est fixée sur la plaque déflectrice (103) de l'élément filtrant (10) par l'intermédiaire d'une liaison par encliquetage.

10. Unité de filtrage selon l'une quelconque des revendications 1 à 9, **caractérisée en ce qu'**au moins un élément d'encliquetage (110) est réalisé ou collé sur un côté de la plaque protectrice (11).
